# EUROPEAN PATENT APPLICATION

(11) **EP 4 613 494 A1**
(43) Date of publication of application: **10.09.2025**
(21) Application number: 25157788.8
(22) Date of filing: 13.02.2025
(51) Int. Cl.: B41J 11/00, B41J 2/21, C09D 11/40

(54) **INKJET PRINTING APPARATUS AND DRYING METHOD OF INKJET PRINTING APPARATUS**

(30) Priority: 07.03.2024 JP 2024035181; 31.01.2025 JP 2025015362
(71) Applicant: CANON KABUSHIKI KAISHA, Tokyo 146-8501 (JP)
(72) Inventor: NAKATSUKA, Yutaro, Tokyo, 146-8501 (JP); TAKADA, Yoichi, Tokyo, 146-8501 (JP); NARUMI, Kazuki, Tokyo, 146-8501 (JP); KOHASHI, Yohei, Tokyo, 146-8501 (JP); OHNISHI, Toru, Tokyo, 146-8501 (JP); SHINJO, Kenji, Tokyo, 146-8501 (JP)
(74) Representative: Canon Europe Limited

(57) **Abstract**

An inkjet printing apparatus comprising a first printing unit configured to apply a first ink to a printing medium, a first drying unit configured to heat the printing medium to which the first ink has been applied, a second printing unit configured to apply a second ink to the printing medium, and a second drying unit configured to heat the printing medium to which the second ink has been applied, and wherein a drying temperature T₁ of the second drying unit in a case where the second ink is applied over a region where the first ink has been applied differs from a drying temperature T₂ of the second drying unit in a case where the second ink is applied to a region where the first ink has not been applied.

## Description

### BACKGROUND OF THE INVENTION

### Field of the Invention

The present invention relates to an inkjet printing apparatus and a drying method of the inkjet printing apparatus.

### Description of the Related Art

In recent years, inkjet printing methods have been increasingly used in the field of sign and display technology, such as printing of posters and large-scale advertisements. In this field, polyvinyl chloride sheets and polyethylene terephthalate (PET) sheets are widely used as printing media due to their durability and cost-effectiveness. They are printing media with little to no ink absorption layer on their printing surfaces and are referred to as so-called non-absorbent printing media (printing media with no ink absorbency) or low-absorbent printing media (printing media with low ink absorbency). Hereinafter, printing media having surfaces with little to no ink absorbency will sometimes be referred to collectively as "low to non-absorbent printing media".

For example, as discussed in Japanese Patent Application Laid-Open No. 2015-071738, printing by applying ink to a non-absorbent printing medium and then applying another ink over the applied ink is widely used.

In many cases, a printing medium to which ink has been applied is heated and dried, regardless of whether it is an absorbent printing medium or a non-absorbent printing medium. In conventional technologies, regions where one ink has been applied and regions where a plurality of inks has been applied to the printing medium are dried without distinction using the same power by a drying unit.

### SUMMARY OF THE INVENTION

The present invention is directed to providing an inkjet printing apparatus capable of setting an appropriate drying condition and a drying method of the inkjet printing apparatus.
The present invention provides an inkjet printing apparatus comprising:
first printing means configured to apply a first ink to a printing medium;
first drying means configured to heat the printing medium to which the first ink has been applied;
second printing means configured to apply a second ink to the printing medium which has been dried by the first drying means; and
second drying means configured to heat the printing medium to which the second ink has been applied,
wherein each of the first ink and the second ink is an ink containing a colorant,
wherein a liquid transfer amount (mL/m²) to the printing medium within 2 seconds from a start of contact is more than 10 mL/m², as measured using the Bristow method, and
wherein a drying temperature T₁ of the second drying means in a case where the second ink is applied over a region where the first ink has been applied differs from a drying temperature T₂ of the second drying means in a case where the second ink is applied to a region where the first ink has not been applied.

According to a first aspect of the present invention, there is provided an inkjet printing apparatus as specified in claims 1 to 10. According to a third aspect of the present invention, there is provided a drying method as specified in claims 11 and 12.

Further features of the present invention will become apparent from the following description of embodiments with reference to the attached drawings.

### BRIEF DESCRIPTION OF THE DRAWINGS

Fig. 1 is a schematic diagram illustrating an internal configuration of an inkjet printing apparatus.
Fig. 2 is a perspective view illustrating a sheet conveyance section housing of a printing unit according to a first embodiment.
Fig. 3 is a perspective view illustrating a printing head raising and lowering mechanism according to the first embodiment.
Fig. 4 is a block diagram illustrating an example of an entire system configuration.
Figs. 5A to 5F are diagrams illustrating the states of a first ink layer and the penetration of a second ink.
Figs. 6A to 6D are diagrams illustrating the penetration of the second ink into different types of printing media in different printing modes.
Fig. 7 is a diagram illustrating a drying temperature setting flow according to the first embodiment.

### DESCRIPTION OF THE EMBODIMENTS

Hereinafter, embodiments of the present invention will be described in detail with reference to the drawings. The constituent elements described in the following embodiments are merely examples, and the configuration of the apparatus to which the present invention is applied and various conditions can be appropriately modified or changed without departing from the scope of the claims. For example, the dimensions, materials, shapes, relative arrangements, and the like of components described in the following embodiments can be appropriately changed according to the configuration of an apparatus to which the present invention is applied and various conditions, and the present invention is not limited to the following embodiments unless otherwise specified.

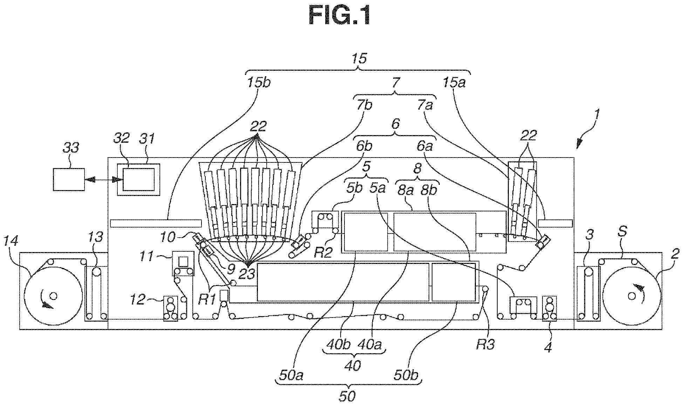

A first embodiment will be described below. In Fig. 1, an upper part of a printing apparatus 1 is defined as a top, a right-to-left direction is defined as a longitudinal direction, and a front-to-back direction on a paper surface that is perpendicular to a printing medium conveyance direction is defined as a sheet width direction. The printing apparatus 1 according to the present embodiment is a highspeed line printer using a continuous sheet wound in a roll as a printing medium.

### <Inkjet Printing Apparatus>

Fig. 1 is a schematic cross-sectional view illustrating an internal configuration of the printing apparatus 1. The printing apparatus 1 according to the present embodiment includes an unwinding roll unit 2, a first dancer unit 3, a first main conveyance unit 4, a skew correction unit 5, a conveyance detection unit 6, a printing unit 7, a conveyance tension detection unit 9, a printed image position detection unit 10, a scanner unit 11, a second main conveyance unit 12, a second dancer unit 13, a rewinding roll section 14, a maintenance unit 15, a drying unit 40 and a cooling unit 50. A continuous sheet S, which is a printing medium, is conveyed along a sheet conveyance path indicated by a solid line in Fig. 1, and processed by each unit.

The printing apparatus 1 according to the present embodiment includes first and second image forming units along the sheet conveyance path (sheet S). In the first image forming unit, an image fixed on the sheet S through a first printing unit 7a, a first drying unit 40a and a first cooling unit 50a is printed. In the second image forming unit, an image fixed on the sheet S through a second printing unit 7b, a second drying unit 40b and a second cooling unit 50b is printed. As described above, the printing apparatus 1 continuously prints an image on the sheet S by passing the sheet S through the first and second image forming units. Further, the printing apparatus 1 can select one of the image forming units based on printing conditions. In this case, only the selected image forming unit is used to print an image on the sheet S.

The unwinding roll unit 2 is a unit for holding and feeding a continuous sheet wound in a roll. The unwinding roll unit 2 is configured to store a wound roll and unwind and feed the sheet S. The number of rolls storable in the unwinding roll unit 2 is not limited to one, and a configuration in which two, three or more rolls are stored and the sheet S is unwound and fed from one of the stored rolls may be employed.

The first dancer unit 3 is a unit for applying constant sheet tension to the sheet S between the unwinding roll unit 2 and the first main conveyance unit 4. The first dancer unit 3 applies sheet tension using a tension application unit (not illustrated).

The first main conveyance unit 4 is a unit for conveying the sheet S to the units provided along the sheet conveyance path (sheet S), and for applying sheet tension to the sheet S between the first main conveyance unit 4 and the second main conveyance unit 12. The first main conveyance unit 4 is rotated as a motor (not illustrated) is driven, and conveys the sheet S under tension.

The skew correction unit 5 is a unit for skew correction in the sheet width direction while the sheet S is conveyed under tension. In the present embodiment, the skew correction unit 5 includes a first skew correction unit 5a and a second skew correction unit 5b. The first skew correction unit 5a is disposed upstream of the image forming units on the sheet conveyance path. The skew correction unit 5 includes a skew correction roller and a skew detection sensor (not illustrated) configured to detect skewing of the sheets S. The skew correction roller changes its angle relative to the sheet S using a motor (not illustrated), and performs skew correction on the sheet S based on the measurements obtained from the skew detection sensor. Winding the sheet S around the skew correction roller enhances the skew correction function.

The conveyance detection unit 6 is a unit for detecting a conveyance speed of the sheet S and pre-printed marks on the sheet S in order to control the timing of image formation in the printing unit 7. In the present embodiment, the conveyance detection unit 6 includes a first conveyance detection unit 6a and a second conveyance detection unit 6b. The first conveyance detection unit 6a is disposed upstream of the image forming units on the sheet conveyance path. The first conveyance detection unit 6a is used to control the timing of image formation in the first printing unit 7a, and the second conveyance detection unit 6b is used to control the timing of image formation in the second printing unit 7b.

The printing unit 7 is a sheet processing unit configured to form an image on the conveyed sheet S by applying liquid compositions (ink) to the sheet S from above via a printing head 22. In the printing unit 7, a guide roller 23 arranged in an arc shape protruding upward form a conveyance path, and constant tension is applied to the sheet S to maintain a clearance from the printing head 22. In the printing head 22, a plurality of printing heads is arranged along the conveyance direction. In the present embodiment, the first printing unit 7a includes two line-type printing heads corresponding to white (W) ink and a reactive liquid. The second printing unit 7b includes eight line-type printing heads corresponding to four colors, which are black (Bk), yellow (Y), magenta (M) and cyan (C), a reactive liquid and three particular colors.

The reactive liquid refers to a liquid containing components that increase the viscosity of ink. The phrase "increase the viscosity of ink" refers to a phenomenon in which colorants and resins that constitute the ink come into contact and chemically react or physically adsorb with the component that increases the viscosity of the ink, resulting in an increase in the viscosity of the ink. An increase in the viscosity of the ink refers to not only an increase in the viscosity of the entire ink but also a localized increase in viscosity caused by the partial aggregation of components that constitute the ink, such as colorants and resins. The components (reactive agent) that increase the viscosity of the ink are not particularly limited and can be polyvalent metal ions, cationic components, such as cationic resins, or organic acids, and any material that causes a change in the pH of the ink and induces aggregation of the colorants in the ink can be used. Applying the reactive liquid before applying the ink to the sheet S allows immediate fixing of the ink once the ink reaches the sheet S. This minimizes bleeding between adjacent inks. The color types, the number of colors and the number of printing heads 22 are not limited. An inkjet method such as a method utilizing a heating element, a method utilizing a piezoelectric element, a method utilizing an electrostatic element or a method utilizing a micro-electro-mechanical systems (MEMS) element can be employed. The ink is supplied from an ink tank (not illustrated) to the printing head 22 through an ink tube. Since the printing head 22 is a full-line type printing head that extends across the sheet S in the sheet width direction, so-called one-pass printing is performed. In one-pass printing, the ink is applied to each unit region in a single scan of the printing head 22 and the printing medium in order to enhance productivity. Specifically, the first image forming unit applies a first ink to the printing medium in a single pass, and the second image forming unit applies a second ink to the printing medium in a single pass. In this case, since the amount of ink applied per unit time increases, the drying load is likely to increase further, but the power required for drying is reduced by employing a configuration according to the present embodiment described below.

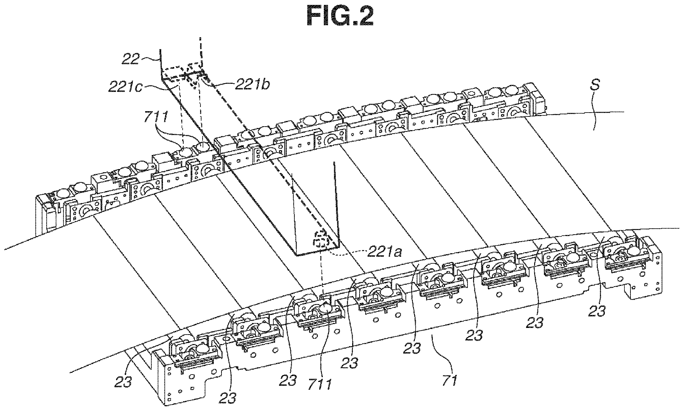

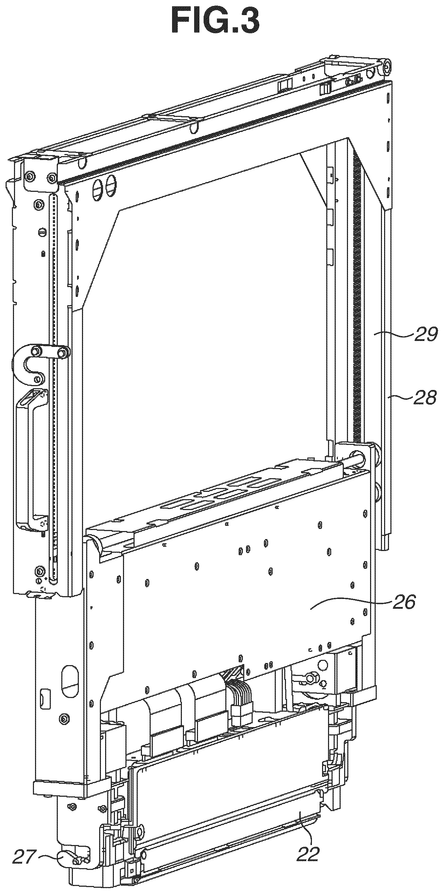

As illustrated in Fig. 2, a sheet conveyance section housing 71 of the printing unit 7 includes a plurality of printing head positioning members 711 for positioning the printing head 22. For each printing head 22, one printing head positioning member 711 is provided at the front, and two printing head positioning members 711 are provided at the back, in the sheet width direction across the sheet S. As illustrated in Fig. 3, the printing head 22 is supported on a printing head holding portion 26 by a printing head supporting shaft 27, with the printing head 22 providing support from below. The printing head holding portion 26 holds and moves the printing head 22 upward and downward. The printing head holding portion 26 moves upward and downward along a rail 29 for moving upward and downward included in a frame 28 for moving the printing head 22 upward and downward, using a drive mechanism (not illustrated) included in the printing head holding portion 26. While an inkjet head is used to apply ink to the sheet S in the present embodiment, this is not a limiting method for applying ink to the sheet S with the printing unit 7. For example, while the reactive liquid is applied by the printing head 22 in the present embodiment, the reactive liquid may be applied by a roller, a die coating apparatus (die coater) or a blade coating apparatus (blade coater).

As illustrated in Fig. 1, the conveyance tension detection unit 9 is a unit for detecting the tension during conveyance under tension between the first main conveyance unit 4 and the second main conveyance unit 12. The printed image position detection unit 10 is a unit for detecting misalignment of the image formed on the sheet S by the printing unit 7 during printing and correcting printing.

A wrapping guide roller R1 is a roller around which a surface of the sheet S in a position downstream of the second printing unit 7b in the conveyance direction and opposite an ink-applied surface of the sheet S wraps at a constant wrapping angle. In the present embodiment, two wrapping guide rollers R1 are disposed between the second printing unit 7b and the second drying unit 40b, and the sheet S is folded so that the folds at the top and bottom of the printing apparatus 1 are approximately parallel to each other. The second drying unit 40b is disposed below the printing unit 7b at the bottom of the printing apparatus 1.

The drying unit 40 (the first drying unit 40a, the second drying unit 40b) is a unit that reduces liquid components contained in the liquid applied to the sheet S by the printing unit 7 and enhances the adhesion between the sheet S and the ink. The drying unit 40 dries the applied ink at a predetermined drying temperature by blowing air heated by a heater onto the printed sheet S. In the drying unit 40, air is blown at least from the ink-applied surface side onto the passing sheet S to dry the ink-applied surface of the sheet S. An alternative to the drying method in which air is blown, a method in which the surface of the sheet S is irradiated with electromagnetic waves (such as ultraviolet rays and infrared rays), a conduction heat transfer method in which a heating element is brought into contact or a combination thereof may be employed. In the present specification, the drying temperature is defined as follows. For example, in the method in which air is blown as described above, the drying temperature refers to the temperature of the air. This temperature may be measured by placing a temperature sensor near the drying unit 40, or may be set as a set temperature for the drying unit 40 by a user. In the other methods, the drying temperature can be determined based on the set temperature.

The cooling unit 50 (the first cooling unit 50a, the second cooling unit 50b) cools the sheet S fixed by the drying unit 40, solidifies the softened ink, and suppresses the amount of change in temperature of the sheet S in a position downstream of the printing apparatus 1. In the cooling unit 50, air lower in temperature than the sheet S is blown at least from the ink-applied surface side onto the passing sheet S to cool the ink-applied surface of the sheet S. The cooling method is not limited to the air blowing method, and a conduction heat transfer method in which a heat-dissipating member is brought into contact or a combination thereof may be employed.

The scanner unit 11 is a unit for reading a test image formed on the sheet S by the printing unit 7 before main printing, detecting image misalignment and density, and correcting main printing.

The second main conveyance unit 12 is a unit that conveys the sheet S while applying tension to the first main conveyance unit 4 and the sheet S, and adjusts the tension of the sheet S. The second main conveyance unit 12 is rotated as a motor (not illustrated) is driven, and a tension control unit (not illustrated) controls the speed of the second main conveyance unit 12 based on the tension value detected by the conveyance tension detection unit 9. As an additional configuration for adjustment of the tension of the sheet S, a configuration in which a clutch (not illustrated) for torque control in a driving connection adjusts the tension of the sheet S may be added. In this case, two tension control methods, a torque control method in which the torque value transmitted from the clutch is controlled and a speed control method in which the roller speed of the second main conveyance unit 12 is controlled, may be included and switched based on the intended purpose or used simultaneously.

The second dancer unit 13 is a unit for applying constant sheet tension between the second main conveyance unit 12 and the rewinding roll section 14. The second dancer unit 13 applies sheet tension using a tension application unit (not illustrated).

The rewinding roll section 14 is a unit for rewinding the printed sheet S around a core. The number of collectable rolls is not limited to one, and a configuration in which two, three or more cores are included and one of the cores is selected and used to collect the sheet S may be employed. Depending on the post-printing processing details, a configuration in which the continuous sheet S is cut with a cutter and the cut sheets S are stacked may be employed instead of the configuration in which the sheet S is wound around the core.

A control unit 31 controls each unit of the entire printing apparatus 1. The control unit 31 includes a central processing unit (CPU), a storage device, a controller including various control units, an external interface and an operation unit 32 via which the user performs input and output. The operation of the printing apparatus 1 is controlled based on instructions from the controller or a host apparatus 33, such as a host computer, connected to the controller via the external interface.

The maintenance unit 15 is a unit including a mechanism for restoring discharge performance of the printing head 22. Examples of such a mechanism include a cap mechanism that protects an ink discharge surface of the printing head 22, a wiper mechanism that wipes the ink discharge surface and a suction mechanism that suctions the ink in the printing head 22 from the ink discharge surface using negative pressure. The maintenance unit 15 includes a drive mechanism (not illustrated) and a rail, and the maintenance unit 15 can reciprocate horizontally along the rail. During maintenance operations on the printing head 22, the maintenance unit 15 moves directly beneath the printing head 22. When maintenance is not being performed, the maintenance unit 15 retracts to a position away from directly beneath the printing head 22. In the present example, a first maintenance unit 15a and a second maintenance unit 15b corresponding to the first printing unit 7a and the second printing unit 7b, respectively, are disposed.

### <System Configuration>

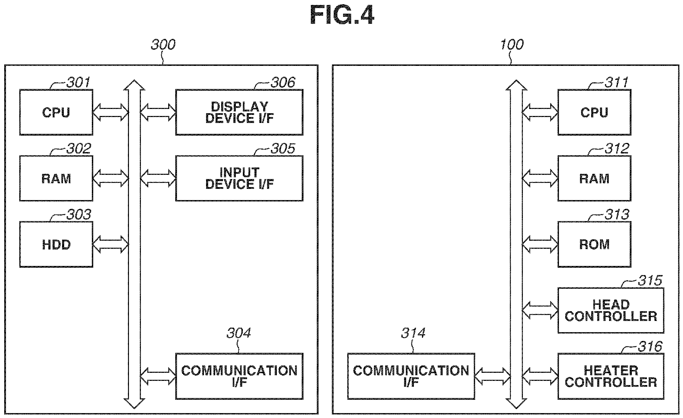

Fig. 4 is a block diagram illustrating an example of an entire configuration of a system including an image forming apparatus 100 according to the present embodiment. As illustrated in Fig. 4, the system according to the present embodiment includes the image forming apparatus 100 illustrated in Fig. 1 and an information processing apparatus (personal computer (PC)) 300 as its host apparatus.

The information processing apparatus 300 includes a CPU 301, a read-only memory (RAM) 302, a hard disk drive (HDD) 303, a communication interface (communication I/F) 304, an input device interface (input device I/F) 305 and a display device interface (display device I/F) 306. The functional units of the information processing apparatus 300 are connected to communicate with each other via an internal bus. The CPU 301 executes processes based on programs and various types of data stored in the HDD 303 or the RAM 302. The RAM 302 is a volatile storage and temporarily stores programs and data. The HDD 303 is a non-volatile storage and stores programs and data.

The communication I/F 304 is an interface that manages communication with external devices and controls data transmission and reception to and from the image forming apparatus 100. As a connection method for data transmission and reception, wired connections, such as Universal Serial Bus (USB), Institute of Electrical and Electronics Engineers (IEEE) 1394 or Local Area Network (LAN), or wireless connections, such as Bluetooth^{®} or Wi-Fi^{®}, can be used. The input device I/F 305 is an interface that controls human interface devices (HIDs), such as a keyboard or a mouse, and receives user input from input devices. The display device I/F 306 controls the display on display devices, such as a display (not illustrated).

While the information processing apparatus 300 is described below as a PC that is separate from the image forming apparatus 100, there are no specific limitations on these implementation configurations if the same processing can be performed. For example, the information processing apparatus 300 may be an apparatus built into the image forming apparatus 100 or may be a server. Further, the information processing apparatus 300 may be, for example, a mobile terminal such as a smartphone, a tablet terminal or an imaging apparatus.

The image forming apparatus 100 includes a CPU 311, a RAM 312, a ROM 313, a communication I/F 314, a head controller 315 and a heater controller 316. Further, the functional units of the image forming apparatus 100 are connected to communicate with each other via an internal bus. The CPU 311 executes processes according to embodiments described below based on programs and various types of data stored in the ROM 313 or the RAM 312. The RAM 312 is a volatile storage and temporarily stores programs and data. The ROM 313 is a non-volatile storage and stores various types of data such as table data and programs that are used in processes described below.

The communication I/F 314 is an interface that manages communication with external devices and controls data transmission and reception to and from the information processing apparatus 300. The head controller 315 controls the printing head 22 illustrated in Fig. 1 based on formation data. Specifically, the head controller 315 may be configured to read control parameters and formation data from a predetermined address of the RAM 312. The heater controller 316 controls the drying unit 40 illustrated in Fig. 1. The heater controller 316 can control the drying temperatures and air speeds of the first drying unit 40a and the second drying unit 40b independently from each other. The printed ink is dried at a drying temperature and air speed set for each printing medium used in printing.

### <Printing Medium>

In the printing method and the printing apparatus 1 according to the present invention, not only absorbent printing media but also low-absorbent or non-absorbent printing media (low to non-absorbent printing media) are usable. A low to non-absorbent printing medium refers to a printing medium with a liquid transfer amount (mL/m²) of 0 mL/m² or more to 10 mL/m² or less, measured within 2 seconds from the start of contact using the Bristow method specified in Japan Technical Association of the Pulp and Paper Industry (JAPAN TAPPI) Paper and Pulp Test Method No. 51, "Paper and Paperboard Liquid Absorbency Test Method". In the present invention, a printing medium that satisfies the above-described water absorption condition is defined as a "low to non-absorbent printing medium". Printing media (such as glossy paper or mat paper) for inkjet printing that include a coating layer (ink receiving layer) formed from inorganic particles and plain paper without coating layers are "absorbent printing media" with a liquid transfer amount of more than 10 mL/m². When using a low to non-absorbent printing medium, it is desirable to use a so-called non-absorbent printing medium with a liquid transfer amount of 1 mL/m² or less. Examples of such a printing medium include polyethylene terephthalate (PET) films and polyvinyl chloride (PVC) films, but any printing medium that satisfies the above-described liquid transfer amount may be used.

As a low to non-absorbent printing medium, a plastic film, a printing medium with a plastic film bonded to the printing surface of a substrate or a printing medium with a resin coating layer on a printing surface of a substrate containing cellulose pulp is usable. Among those listed above, a plastic film is desirable. A printing medium with a resin coating layer on a printing surface of a substrate containing cellulose pulp is also desirable.

In the present specification, the term "printing medium" refers to a printing medium onto which an image is printed as a finished material, rather than a transfer medium.

### <Drying Unit>

In the present embodiment, a drying condition is predetermined for each combination of printing medium and printing mode, and when the user selects a printing medium to be used and a printing mode, the corresponding drying condition is automatically set. The printing mode includes first, second and third modes. In the first mode, the first printing unit 7a alone is used for ink application. In the second mode, the second printing unit 7b alone is used for ink application. In the third mode, the first printing unit 7a and the second printing unit 7b are both used for printing.

### (Drying Condition for Low to Non-Absorbent Printing Medium)

In the present embodiment, the drying conditions differ from each other in the respective modes. First, the drying condition for a low to non-absorbent printing medium will be described below. In the second mode, the second ink is applied directly to the printing medium, so that the region containing the second ink is to be dried by the second drying unit 40b to evaporate the liquid components in the second ink. On the other hand, in the third mode, the second ink is applied to overlap a first ink layer dried by the first drying unit 40a. Thus, in the region where the second ink overlaps the first ink layer, some of the liquid components in the second ink penetrate into the first ink layer, resulting in a substantial reduction in the amount of liquid components that need to be dried by the second drying unit 40b.

For the reasons described above, a drying temperature T₁ of the second drying unit 40b (corresponding to the second drying unit) in the third mode is able to be set lower than a drying temperature T₂ of the second drying unit 40b (corresponding to the second drying unit) in the second mode. Consequently, it is possible to not only set an appropriate drying condition but also reduce the power required for drying.

There may be a case where the second ink is not applied over the first ink layer in the third mode. In this case, the drying temperature T₁ of the second drying unit 40b in the third mode is the same as the drying temperature T₂ of the second drying unit 40b in the second mode. An example of a case where the second ink is applied over the first ink layer is a case where the first ink is applied to an entire surface of a printing medium. Alternatively, a determination unit configured to determine whether the first ink has been applied to a region where the second ink is to be applied may be disposed separately. The user may be prompted to select the mode for overlap application. Specifically, it is desirable to include a control unit configured to control a first printing mode in which the second ink is applied to overlap a region where the first ink has been applied and a second printing mode in which the second ink is applied to a region where the first ink has not been applied. The second printing mode includes a case where the second ink is applied without overlapping the first ink layer in at least some regions and a case where only the second ink is applied. In this case, the drying temperature T₁ of the second drying unit 40b in the first printing mode is lower than the drying temperature T₂ of the second drying unit 40b in the second printing mode. The control unit may control the drying temperature of the second drying unit 40b.

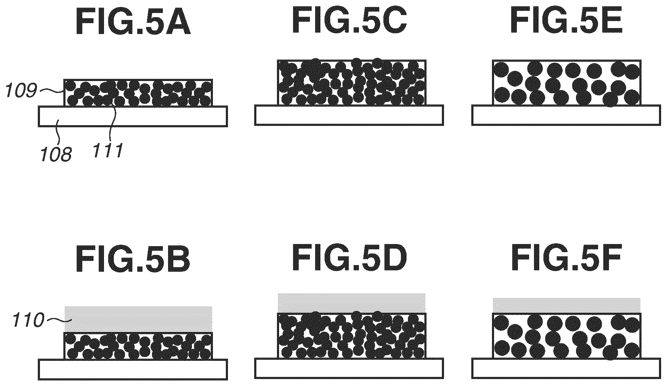

The effect of reducing the power for drying can be improved by the following factor. Figs. 5A to 5F are schematic diagrams illustrating a first ink layer after being dried by the first drying unit 40a and the penetration of a second ink. In Figs. 5A to 5F, a low to non-absorbent printing medium 108, a first ink layer 109 and a second ink 110 before being dried are illustrated. An agglomerate 111 formed by the aggregation of particle components, such as pigments, is also illustrated. In order to reduce the amount of liquid components in the second ink that is to be dried, the liquid components in the second ink need to penetrate into the first ink layer more efficiently. Thus, a measure is taken to facilitate the penetration of the liquid components in the second ink into the first ink layer. Specifically, it is desirable to set the application amount of the first ink per unit area to be more than or equal to the application amount of the second ink per unit area. In a case where the application amount of the first ink is low (Fig. 5A), sufficient penetration of the liquid components in the second ink may not be achieved (Fig. 5B). On the other hand, in a case where the application amount of the first ink is high (Fig. 5C), the first ink layer 109 can have a large thickness, allowing the liquid components in the second ink to penetrate sufficiently (Fig. 5D). As a result, the power for drying is further reduced.

### (Drying Condition for Absorbent Printing Medium)

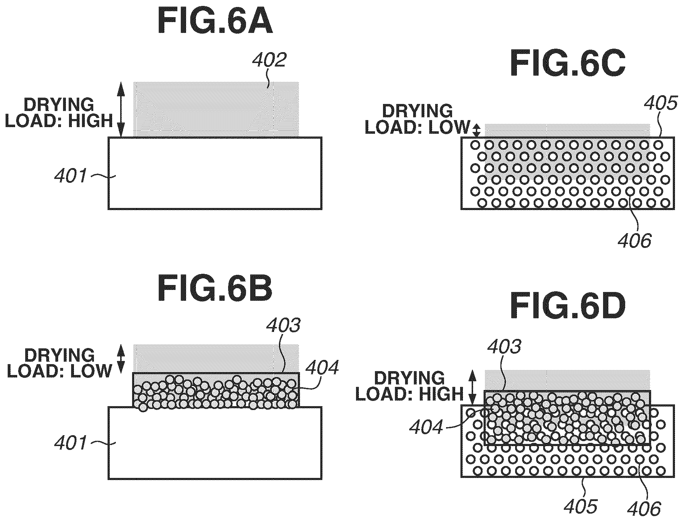

The drying condition for an absorbent printing medium will be described below with reference to Figs. 6A to 6D, which illustrate a comparison of behaviors between a low to non-absorbent printing medium and an absorbent printing medium. Figs. 6A and 6C are schematic diagrams illustrating the states after only the second ink is applied and before drying is performed by the second drying unit 40b. Further, Figs. 6B and 6D are schematic diagrams illustrating the states after the first ink layer is formed and the second ink is applied over the first ink layer and before drying is performed by the second drying unit 40b. In Figs. 6A and 6B, printing is performed on a low to non-absorbent printing medium 401, and a second ink 402 before being dried, a first ink layer 403 and an agglomerate 404 formed by the aggregation of particle components, such as pigments, are illustrated. In Figs. 6C and 6D, printing is performed on an absorbent printing medium 405.

When a liquid such as ink is applied to the absorbent printing medium 405, the liquid components penetrate through spaces between fibers 406. Thus, as indicated by a comparison between Figs. 6A and 6C, although the same amount of ink is applied, the drying load is lower in the case where printing is performed on the absorbent printing medium 405. In other words, the drying temperature in the case illustrated in Fig. 6C can be set lower than the drying temperature in the case illustrated in Fig. 6A.

On the other hand, in the case of the third mode as illustrated in Fig. 6D, the second ink is applied to the first ink layer formed with the spaces between the fibers 406 filled with particulate components (agglomerate 404) such as pigments of the first ink layered on the absorbent printing medium 405. Thus, when Figs. 6C and 6D are compared, the drying load is higher in the case where the second ink is applied to the first ink layer than in the case where only the second ink is applied, which is a phenomenon opposite to that observed with the low to non-absorbent printing medium 401. The increased drying load of this phenomenon can be reduced to some extent by setting the application amount of the first ink per unit area to be more than the application amount of the second ink per unit area as described above.

As a result, the drying temperature T1 of the second drying unit 40b (corresponding to the second drying unit) in the third mode is set higher than the drying temperature T2 of the second drying unit 40b (corresponding to the second drying unit) in the second mode, which allows an appropriate drying condition to be set also for the absorbent printing medium 405 based on the printing mode. Specifically, with the configuration according to the present embodiment, an appropriate drying condition is settable based on whether the printing medium is a low to non-absorbent printing medium and the printing mode.

In the present embodiment, each of the first ink and the second ink may be an aqueous ink containing water or a water-soluble organic solvent, or may be an oil-based ink containing a water-insoluble organic solvent. In a case where the first ink and the second ink are aqueous inks, since drying water requires high power, the drying load is likely to be high. However, the configuration according to the present embodiment effectively reduces the power required for drying.

Desirably, the first ink is a white ink and the second ink is a color ink in the present embodiment to facilitate penetration of the liquid components in the second ink into the first ink layer. An example of a colorant contained in the white ink is titanium oxide. This colorant is larger in particle size than colorants that are used normally in color inks. Thus, in the first ink layer, an agglomerate of titanium oxide, which is a component with a large particle size, is expected to contain many voids in the layer due to its size. As a result, the liquid components in the second ink efficiently penetrate through the voids, which leads to further reduction in the power required for drying.

In the present embodiment, the first and second image forming units respectively apply first and second reactive liquids containing a reactive agent that reacts with ink. Specifically, a first reactive liquid application unit configured to apply the first reactive liquid, which reacts with ink, before the first ink is applied, and a second reactive liquid application unit configured to apply the second reactive liquid, which reacts with ink, before the second ink is applied are included. The reactive agents in the first and second reactive liquids may be the same or different. A single reactive liquid may be used as the first and second reactive liquids. It is desirable to increase the viscosity when the first ink and the first reactive liquid are mixed. Hereinafter, this viscosity will be referred to also as mixing viscosity. By increasing the mixing viscosity, the agglomerate is enlarged (Fig. 5E), and contains many voids in the layer. Desirably, a mixture of the first reactive liquid and the first ink is higher in viscosity than a mixture of the second reactive liquid and the second ink. In embodiments described below, with the reactive liquid and ink applied to the printing medium, the viscosity of a mixed solution prepared by mixing a reactive liquid and ink in a 7:100 ratio (% by mass) which is the condition considering reactivity in image printing was measured.

### <Drying Temperature Setting Flow>

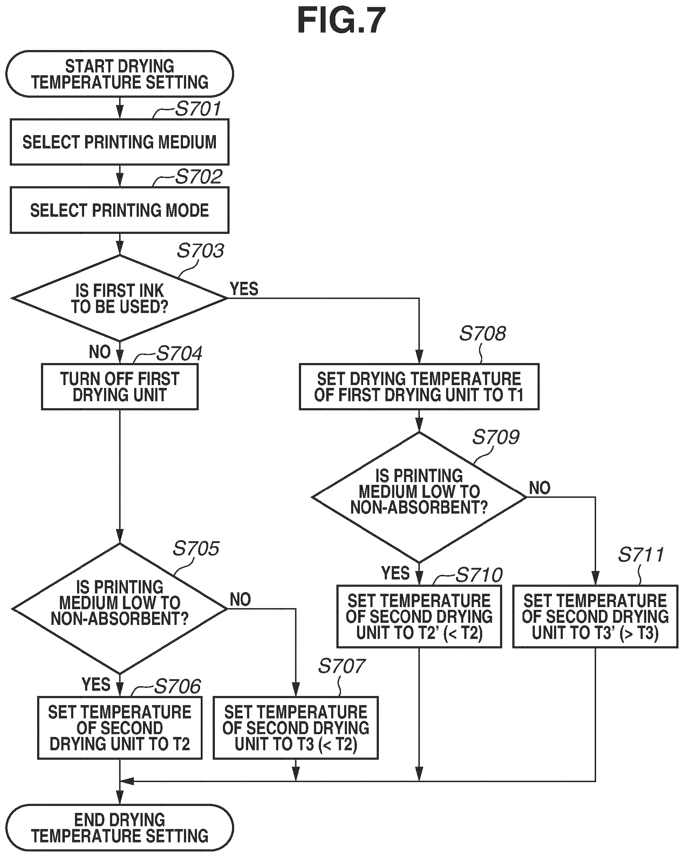

A drying temperature setting flow according to the present embodiment will be described below with reference to Fig. 7. In step S701, a printing medium is selected. Specifically, the user selects a medium type to be used in printing on a display device, such as a display, of the printing apparatus 1. While the user selects a medium type to be used in printing as described above in the present embodiment, a sensor for identify printing medium types may be disposed to the unwinding roll unit 2 to select a printing medium type.

In step S702, a printing mode is selected. Specifically, the user selects a printing mode (from among first mode to third mode) for printing via the display device, such as a display, of the printing apparatus 1.

In step S703, the CPU 311 determines whether the first ink is to be used, based on the printing mode selected by the user. In a case where the CPU 311 determines that the first ink is to be used (YES in step S703), i.e., printing is to be performed in the first mode or the third mode, the processing proceeds to step S708. In a case where the CPU 311 determines that the first ink is not used (NO in step S703), i.e., printing is to be performed in the second mode, the processing proceeds to step S704.

In step S704, since the first ink is not to be used, the CPU 311 turns off the power to the first drying unit 40a. While the present embodiment is configured to reduce the power consumption by turning off the first drying unit 40a, the first drying unit 40a does not necessarily have to be turned off, considering the effort required to turn on the first drying unit 40a again for the next printing. Thus, step S704 may be omitted.

In step S705, the CPU 311 determines whether the printing medium to be used in printing is a low to non-absorbent printing medium, based on information about the printing medium selected by the user. In a case where the CPU 311 determines that the printing medium is a low to non-absorbent printing medium (YES in step S705), the processing proceeds to step S706. In a case where the CPU 311 determines that the printing medium is an absorbent printing medium (NO in step S705), the processing proceeds to step S707.

In step S706, the CPU 311 sets the drying temperature of the second drying unit 40b to T2. Specifically, in a case where the second drying unit 40b performs drying by blowing air, the temperature of the air is set to T2. Then, the drying temperature setting processing is ended.

In step S707, the CPU 311 sets the drying temperature of the second drying unit 40b to T3. T3 is a temperature lower than T2 described above. This is because in a case where an absorbent printing medium is used, the ink penetrates, and the drying load decreases, compared to a case where a low to non-absorbent printing medium is used, as described above with reference to Figs. 6A and 6C. Then, the drying temperature setting processing is ended.

In step S708, the CPU 311 sets the drying temperature of the first drying unit 40a to T1.

Step S709 is similar to step S705. In a case where the printing medium is determined as a low to non-absorbent printing medium (YES in step S709), the processing proceeds to step S710. In a case where the printing medium is determined as an absorbent printing medium (NO in step S709), the processing proceeds to step S711.

In step S710, the CPU 311 sets the drying temperature of the second drying unit 40b to T2'. T2' is a temperature lower than T2. This is because with the first ink layer formed on the low to non-absorbent printing medium, some of the liquid components in the second ink penetrate into the first ink layer, and the drying load decreases, as described above with reference to Figs. 5A to 5F, 6A and 6B. Then, the drying temperature setting processing is ended.

In step S711, the CPU 311 sets the drying temperature of the second drying unit 40b to T3'. T3' is a temperature higher than T3. This is because in a case where the first ink layer has been formed on the absorbent printing medium, the liquid components in the second ink are inhibited from penetrating, and the drying load increases, as described above with reference to Figs. 6C and 6D. Then, the drying temperature setting processing is ended.

By performing the foregoing drying temperature setting according to the present embodiment, an appropriate drying temperature is settable for the printing medium and the printing mode. In particular, even in a case where a low to non-absorbent printing medium that is likely to have a high drying load is used, power consumption is efficiently reduced.

### [Examples]

The present invention will be described in further detail below by giving examples and comparative examples. It should be noted that the present invention is not limited to the examples described below, as long as the gist of the invention is not exceeded. Unless otherwise specified, component amounts indicated as "parts" or "%" are based on mass.

### <Measurement of Physical Properties>

### (Viscosity of Mixed Solution)

The viscosity of each mixture of a reactive liquid and ink was measured as follows. First, a reactive liquid and ink were mixed in a 7:100 ratio (mass ratio). Then, after the mixture was stirred with a stirrer at 1,500 rpm for 10 seconds, the viscosity of the mixed solution was measured. For viscosity measurement, an E-type viscometer (product name "RE-80L", manufactured by Toki Sangyo Co., Ltd.) was used.

### <Reactive Liquid Preparation>

### (Reactive Liquid 1)

15.0 parts of magnesium sulfate heptahydrate, 15.0 parts of 1,2-butanediol, 0.3 parts of acetylenol E100 and 69.7 parts of ion-exchanged water were mixed, stirred sufficiently, and then filtered under pressure using a cellulose acetate filter (manufactured by ADVANTEC) with a pore size of 3.0 µm to prepare a reactive liquid 1. "Acetylenol E100" is the product name of a surfactant manufactured by Kawaken Fine Chemicals Co., Ltd.

### (Reactive Liquid 2)

A reactive liquid 2 was prepared using the same procedure as the reactive liquid 1, except for the change to 5.0 parts of magnesium sulfate heptahydrate and 79.7 parts of ion-exchanged water.

Each ink described below was mixed with each of the reactive liquids 1 and 2 using the above-described method, and the viscosities of the mixtures were measured. Each ink exhibited a higher viscosity when mixed with the reactive liquid 1. In other words, the reactive liquid 1 had a higher ink aggregation property than the reactive liquid 2.

### <Pigment Dispersion Liquid Preparation>

### (Pigment Dispersion Liquid 1)

A styrene-ethyl acrylate-acrylic acid copolymer (resin 1) with an acid value of 150 mgKOH/g and a weight average molecular weight of 8,000 was prepared. 20.0 parts of resin 1 was neutralized with an equimolar amount of potassium hydroxide corresponding to the acid value of the resin 1, and a sufficient amount of pure water was added to prepare an aqueous solution of resin 1 with a resin (solid content) content of 20.0%. 10.0 parts of pigment (C.I. Pigment Blue 15:3), 15.0 parts of aqueous solution of resin 1 and 75.0 parts of pure water were mixed to obtain a mixture.

The obtained mixture and 200 parts of zirconia beads with a diameter of 0.3 mm were placed into a batch-type vertical sand mill (manufactured by AIMEX CO., LTD.) and dispersed for 5 hours while being cooled with water. After centrifugal separation was performed to remove coarse particles, filtration was performed under pressure using a cellulose acetate filter (manufactured by ADVANTEC) with a pore size of 3.0 µm to prepare a pigment dispersion liquid 1 with a pigment content of 10.0% and a resin dispersant (resin 1) content of 3.0%.

### (Pigment Dispersion Liquid 2)

A pigment dispersion liquid 2 with a pigment content of 10.0% and a resin dispersant (resin 1) content of 3.0% was prepared using the same procedure as the pigment dispersion liquid 1, except that the pigment was changed to C.I. Pigment Red 122.

### (Pigment Dispersion Liquid 3)

A pigment dispersion liquid 3 with a pigment content of 10.0% and a resin dispersant (resin 1) content of 3.0% was prepared using the same procedure as the pigment dispersion liquid 1, except that the pigment was changed to C.I. Pigment yellow 74.

### (Pigment Dispersion Liquid 4)

A pigment dispersion liquid 4 with a pigment content of 10.0% and a resin dispersant (resin 1) content of 3.0% was prepared using the same procedure as the pigment dispersion liquid 1, except that the pigment was changed to carbon black.

### (Pigment Dispersion Liquid 5)

A pigment dispersion liquid 5 with a pigment content of 40.0% and a resin dispersant (resin 1) content of 12.0% was prepared using the same procedure as the pigment dispersion liquid 1, except that the pigment was changed to C.I. Pigment white 6.

### <Ink Preparation>

The components (unit: %) presented in Table 1 were mixed, stirred sufficiently, and then filtered under pressure using a cellulose acetate filter (manufactured by ADVANTEC) with a pore size of 3.0 µm to prepare the inks. A liquid containing acrylic resin particles (product name "VINYBLAN 2685", manufactured by Nissin Chemical Industry Co., Ltd., resin particle content: 30%) was used as a water dispersion of resin particles in Table 1.

**Table 1: Ink Composition**

| | Black Ink | Cyan Ink | Magenta Ink | Yellow Ink | White Ink |
|---|---|---|---|---|---|
| Pigment Dispersion Liquid 1 | 35.0 | | | | |
| Pigment Dispersion Liquid 2 | | 35.0 | | | |
| Pigment Dispersion Liquid 3 | | | 35.0 | | |
| Pigment Dispersion Liquid 4 | | | | 35.0 | |
| Pigment Dispersion Liquid 5 | | | | | 30.0 |
| Water Dispersion Liquid of Resin Particles | 24.0 | 24.0 | 24.0 | 24.0 | 24.0 |
| 1,2-Propanediol | 15.0 | 15.0 | 15.0 | 15.0 | 15.0 |
| Acetylenol E100 | 0.5 | 0.5 | 0.5 | 0.5 | 0.5 |
| Ion-exchanged Water | 25.5 | 25.5 | 25.5 | 25.5 | 30.5 |

### <Printing Medium Preparation>

The following printing media were used.
· Printing medium 1: product name "PET50(A) PAT1 8LK", manufactured by LINTEC Corporation, adhesive label, material: PET, liquid transfer amount within 2 seconds from the start of contact = 0 mL/m² or more to 1 mL/m² or less, as measured using the Bristow method.
· Printing medium 2: product name "PVC80M P 11K SHIRO (white)", manufactured by LINTEC Corporation, adhesive label, material: polyvinyl chloride, liquid transfer amount within 2 seconds from the start of contact = 0 mL/m² or more to 1 mL/m² or less, as measured using the Bristow method.
· Printing medium 3: product name "ART E PW 8K", manufactured by LINTEC Corporation, liquid transfer amount within 2 seconds from the start of contact = more than 10 mL/m², as measured using the Bristow method.

### <Evaluation>

A 5 cm × 5 cm solid image was printed under the conditions specified in Table 2 using the printing apparatus 1 of the inkjet type illustrated in Fig. 1. A white ink was used as the first ink, and a black ink was used as the second ink. In the case of using the first reactive liquid, the first reactive liquid was applied before the first ink was applied, and in the case of using the second reactive liquid, the second reactive liquid was applied before the second ink was applied. The first and second drying units 40a and 40b blow air as a drying method. In Table 2, the drying temperature of each heating unit represents the temperature of the blown air. The drying temperatures of the first and second drying units 40a and 40b are set so that the residual solvent content of the image remains at or below a specified percentage, and in the following examples, if the conveyance speeds are the same, the heating times are also the same.

As a method for indirectly determine that the residual solvent content of the image is at or below the specified percentage, the following method was used. First, a friction test was performed on a printed image surface using a 500 g load with 50 back- and-forth cycles using a friction white cloth (cotton) specified by JIS L0803 and a JIS K 5701-compliant Gakushin-type friction fastness tester (product name "AB-301", manufactured by TESTER SANGYO CO., LTD.). Then, the image after the friction test was visually checked, and whether the image was sufficiently dried was determined by checking whether the substrate surface of the printing medium was invisible.

A first example is an example in which the second ink was applied without applying the first ink, with the drying temperature (air temperature) of the second drying unit 40b set to 90°C. Further, an example is an example in which the second ink was applied over the first ink, and an intended image is printable even if the drying temperature of the second drying unit 40b is set lower than that in the first embodiment. In other words, the power required for drying is able to be reduced.

A comparison of second and third examples indicates that increasing the application amount of the first ink enhances the power consumption reduction effect. Among four to sixth examples in which the type of reactive liquid was changed, the fifth example demonstrated the most significant power consumption reduction effect. It is considered that due to the higher mixing viscosity of the first reactive liquid and the first ink than the mixing viscosity of the second reactive liquid and the second ink, voids increase easily in the first ink layer, which facilitates the penetration of the liquid components in the second ink.

In the examples, the drying temperature of the second drying unit 40b may also be changed depending on the printing medium to be used, besides the printing mode. Specifically, as specified in the sixth and seventh examples, the drying temperature is set low in a case where the printing medium 2 having a lower heat resistance temperature than that of the printing medium 1 is used. Even in this case, the drying temperature in the case of applying the second ink over the first ink can be set lower than the drying temperature in the case of applying the second ink without applying the first ink. In other words, the power required for drying can be reduced. In an eighth example, an image was printed using the same procedure as in the second example, except that a black ink was used as the first ink and a white ink was used as the second ink. The effect of reducing the power for drying in the eighth example was less effective compared to the second example. It is considered that voids that allow the penetration of the liquid components in the second ink are less likely to form in a case where another ink is used as the first ink instead of the white ink.

The same evaluation was conducted using a cyan ink, a magenta ink and a yellow ink as the second ink instead of the black ink, and it was found that the power for drying was similarly reduced. Then, the evaluation was conducted under the same conditions as the second example, except that synthetic paper (product name "YUPO 60 PAT 18K", manufactured by LINTEC Corporation, liquid transfer amount within 2 seconds from the start of contact = 2 mL/m² to 3 mL/m², as measured using the Bristow method) was used as the printing medium. As a result, the effect of reducing the drying temperature was less effective compared to the second example.

Then, the same evaluations were conducted under the same conditions as the first example and second example, respectively, except that the printing medium 3 was used as the printing medium in nineth example and tenth example. As a result, at the drying temperature (60°C.) of the second drying unit 40b in nineth example, the image in tenth example was not sufficiently dried. This is because, as described above, in an absorbent recording medium, the drying load is high when the first ink layer is formed in advance.

**Table 2: Evaluation Condition**

| | | Printing Medium | Conveyance Speed (mpm) | First Reactive Liquid | First Ink App Amount (g/m²) | Drying Temperature of First Drying Unit (°C) | Second Reactive Liquid | Second Ink App Amount (g/m²) | Drying Temperature of Second Drying Unit (°C) |
|---|---|---|---|---|---|---|---|---|---|
| Exp | 1 | 1 | 15 | N/A | N/A | - | 1 | 10 | 90 |
| | 2 | 1 | 15 | 1 | 15 | 80 | 1 | 10 | 85 |
| | 3 | 1 | 15 | 1 | 25 | 90 | 1 | 10 | 83 |
| | 4 | 1 | 15 | 1 | 25 | 90 | 2 | 10 | 80 |
| | 5 | 1 | 15 | 2 | 25 | 90 | 2 | 10 | 85 |
| | 6 | 2 | 8 | N/A | N/A | - | 1 | 10 | 60 |
| | 7 | 2 | 8 | 1 | 25 | 60 | 1 | 10 | 57 |

### <Other Embodiments>

A feature of the above-described embodiment is that a preset temperature condition is selected based on the printing medium type and the printing mode. However, cases in which the temperature condition is automatically detected when a sheet is fed are also included within the scope of the present invention. For example, an apparatus that reads a dried image surface using an optical sensor and determines the drying temperature based on changes in reflectance may be employed.

The present invention provides an inkjet printing apparatus capable of reducing the power for drying and a drying method of the inkjet printing apparatus.

While the present invention has been described with reference to embodiments, it is to be understood that the invention is not limited to the disclosed embodiments but is defined by the scope of the following claims.

## Claims

1. An inkjet printing apparatus comprising:
first image printing means (7a) configured to apply a first ink to a printing medium;
first drying means (40a) configured to heat the printing medium to which the first ink has been applied;
second printing means (7b) configured to apply a second ink to the printing medium which has been dried by the first drying means; and
a second drying means (40b) configured to heat the printing medium to which the second ink has been applied,
wherein each of the first ink and the second ink is an ink containing a colorant,
wherein a liquid transfer amount (mL/m²) to the printing medium within 2 seconds from a start of contact is 10 mL/m² or less, as measured using the Bristow method, and
wherein a drying temperature T₁ of the second drying means (40b) in a case where the second ink is applied over a region where the first ink has been applied is lower than a drying temperature T₂ of the second drying means in a case where the second ink is applied to a region where the first ink has not been applied.

2. An inkjet printing apparatus comprising:
first printing means (7a) configured to apply a first ink to a printing medium;
first drying means (40a) configured to heat the printing medium to which the first ink has been applied;
second printing means (7b) configured to apply a second ink to the printing medium which has been dried by the first drying means; and
second drying means (40b) configured to heat the printing medium to which the second ink has been applied,
wherein each of the first ink and the second ink is an ink containing a colorant,
wherein a liquid transfer amount (mL/m²) to the printing medium within 2 seconds from a start of contact is more than 10 mL/m², as measured using the Bristow method, and
wherein a drying temperature T₁ of the second drying means (40b) in a case where the second ink is applied over a region where the first ink has been applied is higher than a drying temperature T₂ of the second drying means in a case where the second ink is applied to a region where the first ink has not been applied.

3. The inkjet printing apparatus according to claim 1 or 2, wherein the liquid transfer amount (mL/m²) to the printing medium within 2 seconds from the start of contact is 1 mL/m² or less, as measured using the Bristow method.

4. The inkjet printing apparatus according to any one of the preceding claims, wherein each of the first ink and the second ink is an aqueous ink.

5. The inkjet printing apparatus according to any one of the preceding claims, further comprising control means (50) configured to control a first printing mode in which the second ink is applied over a region where the first ink has been applied and a second printing mode in which the second ink is applied to a region where the first ink has not been applied.

6. The inkjet printing apparatus according to any one of the preceding claims, wherein an application amount of the first ink per unit area is more than or equal to an application amount of the second ink per unit area.

7. The inkjet printing apparatus according to any one of the preceding claims, wherein the first printing means (71) is configured to apply a first reactive liquid containing a reactive agent that reacts with ink, and the second printing means (7b) is configured to apply a second reactive liquid containing a reactive agent that reacts with ink.

8. The inkjet printing apparatus according to claim 7, wherein a mixture of the first reactive liquid and the first ink is higher in viscosity than a mixture of the second reactive liquid and the second ink.

9. The inkjet printing apparatus according to any one of the preceding claims, wherein the first ink is a white ink, and the second ink is a color ink.

10. The inkjet printing apparatus according to any one of the preceding claims, wherein the first printing means (7a) is configured to apply the first ink to the printing medium in a single pass, and the second printing means (7b) is configured to apply the second ink to the printing medium in a single pass.

11. A drying method of an inkjet printing apparatus, the drying method comprising, in the following order:
a first printing step of applying a first ink to a printing medium;
a first drying step comprising heating the printing medium to which the first ink has been applied;
a second printing step of applying a second ink to the printing medium; and
a second drying step comprising heating the printing medium to which the second ink has been applied,
wherein each of the first ink and the second ink is an ink containing a colorant,
wherein a liquid transfer amount (mL/m²) to the printing medium within 2 seconds from a start of contact is 10 mL/m² or less, as measured using the Bristow method, and
wherein a drying temperature T₁ of the second drying in a case where the second ink is applied over a region where the first ink has been applied is lower than a drying temperature T₂ of the second drying in a case where the second ink is applied to a region where the first ink has not been applied.

12. A drying method of an inkjet printing apparatus, the drying method comprising, in the following order:
a first printing step of applying a first ink to a printing medium;
a first drying step comprising heating the printing medium to which the first ink has been applied;
a second printing step of applying a second ink to the printing medium; and
a second drying step comprising heating the printing medium to which the second ink has been applied,
wherein each of the first ink and the second ink is an ink containing a colorant,
wherein a liquid transfer amount (mL/m²) to the printing medium within 2 seconds from a start of contact is more than 10 mL/m², as measured using the Bristow method, and
wherein a drying temperature T₁ of the second drying in a case where the second ink is applied over a region where the first ink has been applied is higher than a drying temperature T₂ of the second drying in a case where the second ink is applied to a region where the first ink has not been applied.
